# EUROPEAN PATENT APPLICATION

(11) **EP 0 854 421 A1**
(43) Date of publication of application: **22.07.1998**
(21) Application number: 97204139.6
(22) Date of filing: 30.12.1997
(51) Int. Cl.: G06F 9/44

(54) **Method and apparatus for rapid adaptation of a computer to user's computer personality**

(30) Priority: 03.01.1997 US 34724 P
(71) Applicant: Isogon Corporation, New York, New York 10001 (US)
(72) Inventor: Barritz, Robert, New York, New York 10001 (US)
(74) Representative: Maggioni, Claudio

(57) **Abstract**

A method and apparatus for gathering and recording data and specifications, including license passwords and license information, relative to the manner in which an individual has set up and personalized a personal computer so that this personalization can be readily transported to, and established on, a different personal computer, facilitating casual "walk-up" use of computers available for public use, or any computer other than one's own.

## Description

### BACKGROUND OF THE INVENTION

The present invention is directed to a method and apparatus for gathering and recording data and specifications relative to the manner in which an individual has set up and personalized a personal computer, so that this personalization can be readily transported to, and established on, a different personal computers facilitating upgrading to a new computer, using password-protected software products on a computer other than the user's primary computer, use by employees, from time to time, of different computers within a workplace, casual "walk-up" use of computers available for public use, e.g. at a hotel, or any computer other than one's own.

It has become routine for business travelers to use laptop computers, which are typically set up to closely match the software and data installed on the user's desktop computer. Using a laptop, a traveler can consult or update his schedule, or create, modify or deliver a presentation, compose a document, or, with access to a telephone hookup, send and receive e-mail, or surf the Internet. But travelers sometimes find themselves in situations in which it would be convenient to use someone else's computer, or a public computer in, say, a restaurant, a hotel lobby, or an airport lounge. For example, the traveler may not have a laptop available, or there may not be a phone line available to which to connect a laptop.

And, as it becomes more common to access the Internet through TV sets, using set-up devices, travelers will increasingly be able to connect to web sites or retrieve e-mail from their hotel rooms.

But, as available as these "walk-up" computers or Internet connection devices become, there are practical impediments to their use. Even though most users only require the availability of a small number of software products, e.g. from Microsoft, Lotus, and a few other vendors, which could be expected to be installed on any public computer, certain other configuration settings and user-related information must be established on the walk-up computer before a new user can use it effectively. For example, to use e-mail, the identifying information of the user's e-mail provider, the user's e-mail ID, and his password would all have to be input into the computer's e-mail software. To use the Internet to connect to specific sites, it is necessary that the user's bookmarks (a list of Internet addresses) be input into the computer's Internet browser. The "cookies" file that many Internet sites use to store information about the user might beneficially be transferred to the new computer. To create a document, the user's standard formatting choices (fonts, point sizes, margins, layout, etc.) should be put into the new computer's word processor. And for the user to consult or modify his schedule, the computer's scheduling software would need access to the database containing the user's schedule. Furthermore, although a product may be physically accessible from a public computer or an Internet connection, unless the user has the appropriate license, he may not legally be able to use the product on that device. In some cases, a product cannot be run unless the user supplies the appropriate password (typically generated by the product vendor or distributor).

Another situation in which such user-specific information is desirable is that of upgrading from one computer to another. Normally, when a user acquires a new computer, such personalization must be reestablished on a manual basis or by transferring selected files. However, since the user rarely knows where all such personalization is stored, much of the personalization is lost and must be manually recreated.

In some systems, such as Windows 95, much of this user-specific information is kept segregated, allowing multiple users to alternately use the same computer. (In Windows 95, much of this information is kept in the Registry.) But there is no provision for capturing or dumping the totality of information pertaining to a particular user, then reestablishing this information rapidly on another computer. (Note that, in a sense, this could be done by simply creating a backup copy of the user's entire desktop computer hard drive, settings, data, and all, and then restoring this backup onto another computer. But this is a lengthy, non-selective procedure that would be impractical and unsuitable to the needs described above.)

### SUMMARY OF THE INVENTION

Accordingly, it is an object of the present invention to provide a method and apparatus which permits the gathering and recording of license passwords and license information, data and specifications relative to the manner in which an individual has set up and personalized a personal computer, so that this personalization can be readily transported to, and established on, a different personal computer.

Other features and advantages of the present invention will become apparent from the following description of the invention which refers to the accompanying drawings.

### BRIEF DESCRIPTION OF THE DRAWINGS

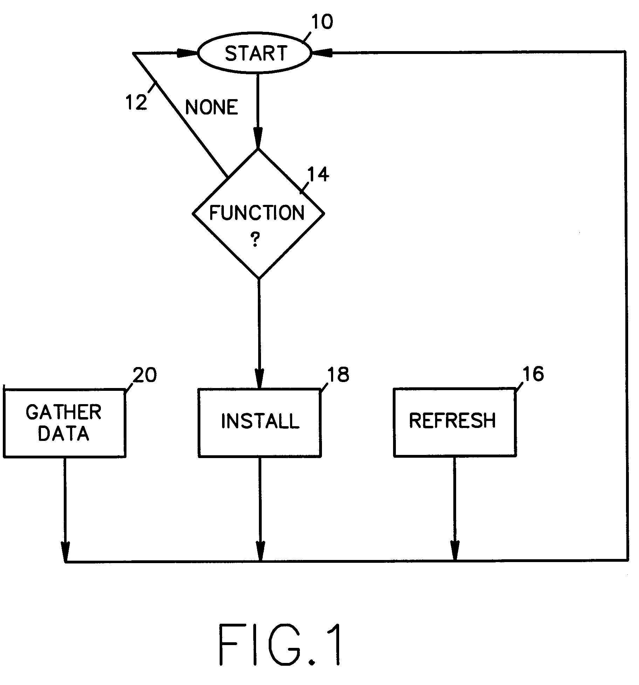

Figs. 1-3 are flow charts of various software routines of the present invention.

### DETAILED DESCRIPTION OF THE INVENTION

The process of the invention comprises three main components: the gathering component, the reinstall component, and the refresh component.

The Gatherer: The gathering component (the "Gatherer") would gather up from the user's primary computer the appropriate license passwords and license information, settings, specifications, and user-data that will enable the user to work on another computer. The Gatherer can be invoked from the primary computer itself, or remotely from the secondary computer, or from another computer altogether, via standard remote access techniques such as the Internet or dial-up access. The Gatherer would contain a file of software products comprising information about each relevant release or version of each product (the "Profile") giving, for each the nature of the data to be gathered and its location, which could be in a central repository such as the Windows 95 Registry, or in a product-specific file, and depending on the product in question, might consist of settings and specifications only, user-data only, or a combination. For example, it might be sufficient to gather from an e-mail product just the specification of the user's e-mail ID, his e-mail provider, and his password, but from a appointment-scheduling product it would be necessary to gather the data file containing the user's present schedule. For each of the products in the Profile (or just for those selected by the user) the Gatherer would gather the indicated data from the indicated location. This would be done either by copying the relevant portion of the central repository or product-specific file, or, alternatively, by copying the entire file.

As an alternative means of gathering the information, the Gatherer could "observe" the user as the desired specifications and setting are entered into each of the user's software products. The "observation" would be done using a common technique known as "keystroke capture", in which each data-entry operation, or mouse click, is captured so that it can be robotically replayed in the future to obtain the identical effect.

Or, the data could be gathered by leading the user through an explicit script, inputting the appropriate information directly into the Gatherer.

However gathered, the totality of gathered settings, specifications, and user data files would be recorded by the Gatherer on a database (the "Personabase").

In some cases, in order to comply with the terms and conditions of the user's license agreement for a particular product, the Gatherer will remove or temporarily nullify the license or license password on the primary computer, so that the product would not be improperly usable on more computers than it was licensed for.

The Reinstaller: The reinstall component (the "Reinstaller") would use the data recorded on the Personabase to establish the user's settings and data on the target computer. The Personabase could reside on portable media (such as a diskette) in the user's possession, or could reside at a central location, such as a network server, central computer, or an Internet web site or ftp-site, accessible from the target computer (which would be necessary if the target computer is only a TV-top Internet connection device, lacking a diskette drive), most likely in encrypted, password-protected form. The Reinstaller, executing on the target computer, would read the Personabase and establish on the target computer all the settings, specifications, and data originally gathered by the Gatherer (or just those selected by the user). If necessary and as appropriate, the Reinstaller would establish the appropriate license passwords and license information to allow the licensed products to be run on the target computer. The user could then proceed to use the computer in his accustomed fashion. The original values on the target computer of any setting changed during the reinstallation process would be saved by the Reinstaller, then reinstated at the completion of the user's session. Essentially the same process would take place in running the Reinstaller on a new computer to which the user is upgrading. In this case, the user would have the option of indicating that the new computer is thereafter meant to be considered the user's primary computer. When the Reinstaller is running on a computer with multiple releases (versions) of a product, it either automatically uses the most recent version or (at the user's option) queries the user on a product-by-product basis as to which version is to be used. When the software product to be used on the target computer is a more recent version of the product than on the primary computer, the Reinstaller automatically, with guidance from the user as may be required, maps the personalization settings for that product into the appropriate settings for that new version.

The Refresher: At the completion of a user's session on a target computer, the refresh component (the "Refresher") would automatically (or as directed by the user) gather, in a manner similar to that used by the Gatherer, any specifications or data on the target computer that have changed during the session. The Personabase would be updated to reflect these changes. Thus, any changes made by the user during one session would be reflected in the initial environment established by the Reinstaller for a subsequent session. The refresher would also remove any user-specific information or settings established on the target computer, and would remove any license passwords or license information established for the session.

(Note that when the peripatetic user eventually returns to his primary computer, the Reinstaller would be used to bring that computer up to date, so that it would reflect any changes made by the user during sessions on other computers. The Reinstaller would also reestablish whatever license passwords and licensed information that had been removed or nullified, thereby once again allowing the user to use the licensed products on the primary computer.)

Referring now to the drawings, Fig. 1 shows the overall flow chart of the invention. It includes a software start block 10 which carries the program to functional decision block 14 in which the software queries which function is to be performed. If the function to be performed is the gathering of personalization data, the software proceeds to block 20 and, similarly, the program proceeds to blocks 18 and 16 if the function to be performed is the installation of the software at a different computer or the refreshing of the personalization data, respectively. If no function has been requested the program proceeds via block 12 to the start block 10.

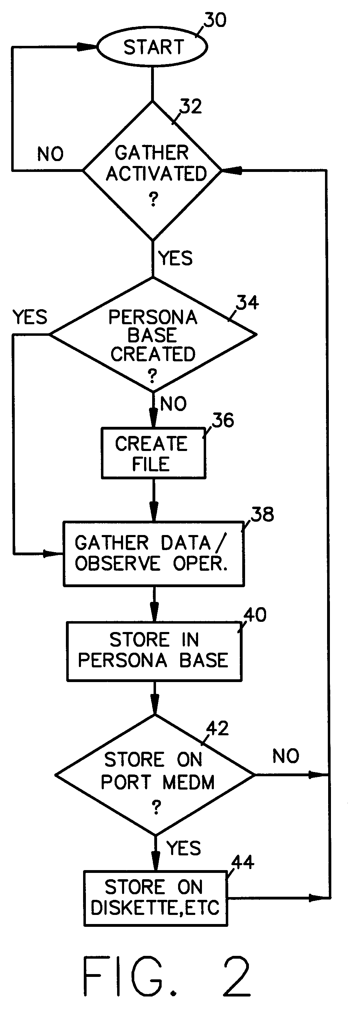

The "Gatherer" function of the present invention is illustrated in Fig. 2 in which the program starts at block 30 and proceeds to decisional block 32 which asks whether the gathering function has been enabled (as by an instruction entered through the keyboard of a computer). If the answer is a "no", the software returns to block 30. Otherwise, the program proceeds to the next decisional block which asks whether a "Personabase" file has been previously opened. If the answer is "no" the program creates such a file at step 36. Otherwise, the program proceeds to the block 38 where the program carries out its gathering function, either by gathering data or observing the operation through the technique known as "keystroke capture", as previously described. Once the information has been gathered, that "personalization" information is stored in the "Personabase" file at step 40. At decisional block 42, the program queries whether the personalization information should be stored on a portable medium such as a diskette. If "yes", the program proceeds to block 44 where that function is carried out. Thereafter, the program returns to decisional block 32 as indicated.

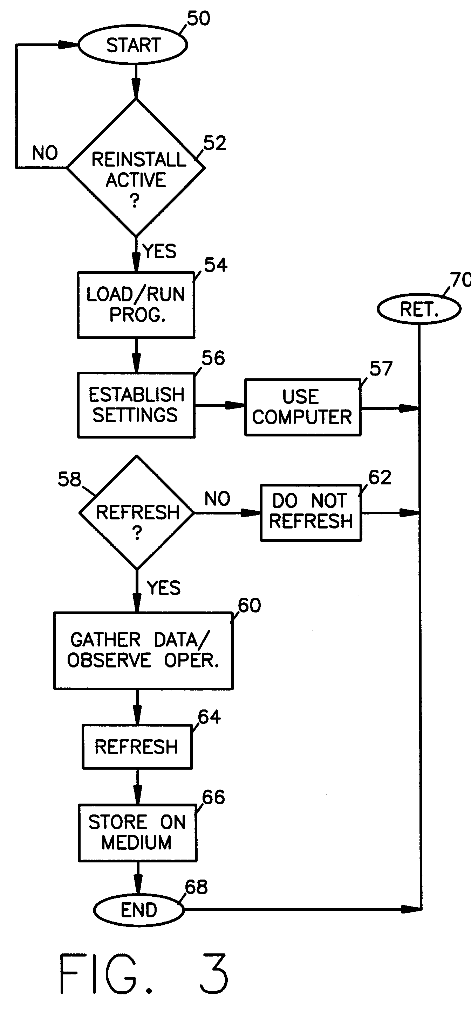

Fig. 3 illustrates the flow chart of the "Reinstaller" and the "Refresher" components of the present invention. The program starts at block 50 from which it proceeds to decisional block 52 which queries whether the Reinstaller function has been enabled. If "no", the program returns to start block 50. Otherwise, the program proceeds to block 54 which loads and begins to execute the Reinstaller software which has been instilled at a remote site. The execution of the program results, as indicated at block 56, in the establishment of the personalized settings at the remote computer. At this point the user may proceed by using the remote computer which has been reconfigured to his/her personal set up, as indicated by block 57.

At decision block 58 the program queries whether the operator has enabled the Refresher function, i.e. whether the operator desires that any new changes to the settings be stored for later use. If "no", the program proceeds via block 62 to the program return location 70. Otherwise, the program proceeds by either gathering data or observing the operator's keystrokes (while the computer is in use, e.g. see block 57), as described previously. At block 64, the "Personabase" file is refreshed and at block 66 the refreshed and/or revised "Personabase" file is stored on the portable media such as the diskette (or on a remote data storage facility, i.e. an Internet file). This signals the end of the operation and the program returns via the end block 68 to the return block 70.

The computer personalizing system of the present invention may be supplied as a separately provided software package. Alternatively, it may be bundled with another software module or application or operating system and the like. For example, the process/software of the present invention may be made part of a Windows (or some other operating system), or may be provided within a licensed management system, and parts of it could be incorporated within a kiosk or Internet TV-Top (or cellular or mobile) device.

Although the present invention has been described in relation to particular embodiments thereof, many other variations and modifications and other uses will become apparent to those skilled in the art. It is preferred, therefore, that the present invention be limited not by the specific disclosure herein, but only by what it fairly discloses to persons skilled in the art.

## Claims

1. A computer process comprising the acts of:
creating a user profile containing user specific data related to settings, specifications and other data contained on a first computer;
installing the user profile on a second computer and modifying the second computer to operate based on the user profile; and
operating the modified second computer.

2. A computer process as set forth in claim 1, wherein the act of creating the user profile further comprises the acts of:
prompting the user for the user specific data;
accepting the user specific data from the user; and
storing the user specific data in the user profile.

3. A computer process as set forth in claim 1, wherein the act of creating the user profile further comprises the acts of:
identifying software products on the first computer which contain user specific data; and
copying the user specific data from the identified software products to the user profile.

4. A computer process as set forth in claim 1, wherein the act of creating the user profile further comprises the act of:
capturing the user specific data as the user operates the first computer.

5. A computer process as set forth in claim 4, wherein the act of capturing the user specific data is accomplished using keystroke capture techniques.

6. A computer process as set forth in claim 1, further comprising the acts of:
determining if any user specific data has changed during the operation of the second computer; and
updating the user profile with changed user specific data.

7. A computer process as set forth in claim 1, wherein the user profile is a file on the first computer.

8. A computer process as set forth in claim 7, further comprising the act of copying the user profile from the first computer to a portable storage media.

9. A computer process as set forth in claim 7, further comprising copying the user profile to a storage location accessible from the second computer.

10. A computer process as set forth in claim 9, wherein the storage location accessible from the second computer is accessible from the Internet.

11. A computer process as set forth in claim 9, wherein the storage location accessible from the second computer is on a central computer.

12. A computer process as set forth in claim 1, wherein the second computer is a personal computer.

13. A computer process as set forth in claim 1, wherein the second computer is an Internet connection device.

14. A computer process as set forth in claim 12, wherein the Internet connection device is a TV set-top device.

15. A computer process as set forth in claim 1, wherein the act of modifying the second computer comprises the acts of:
reading the user profile; and
updating the second computer with the user specific data contained in the user profile.

16. A computer process as set forth in claim 1, wherein the user specific data includes one or more specific data selected from: an E-mail ID, passwords, bookmarks, word processing profiles, user schedule data, spread sheet profiles, license authorizations, cookie-file data and general user data.

17. A computer process as set forth in claim 1, including the step of initiating the creation of the user profile data through a manual operation of a computer other than the first computer.

18. A computer process as set forth in claim 1, including nullifying at least one license stored on the first computer and enabling said at least one license on the second computer when the user profile is installed on the second computer.

19. A computer process as set forth in claim 1, including the steps of:
temporarily storing a second user profile associated with the second computer on a storage medium; and
reinstalling the second user profile on the second computer in response to an operator command.

20. A computer process as set forth in claim 19, wherein the storage medium comprises a medium selected from the group including: magnetic media, a central computer, an Internet web site, an ftp-site and optical memory.

21. A computer process as set forth in claim 1, including the step of refreshing the second computer automatically with changed specification or changed data created on the second computer during an immediately preceding working session.

22. A computer process as set forth in claim 1, including providing the process in the form of a computer software package and variously storing the computer software package to be part of an operating system, a licensed management system, or an Internet TV-Top device.

23. A computer process comprising the acts of:
creating a user profile file;
gathering user specific information related to settings, specifications and other information contained on a first data processing system;
storing the user specific information in the user profile file;
copying the user profile to a storage location accessible from a second data processing system;
accessing the user profile from the storage location with the second data processing system;
modifying the second data processing system in response to the user profile to create a modified second data processing system; and
operating the modified second data processing system.
